# EUROPÄISCHE PATENTSCHRIFT

(11) **EP 1 547 745 B1**
(45) Veröffentlichungstag und Bekanntmachung des Hinweises auf die Patenterteilung: **27.08.2008**
(21) Anmeldenummer: 03029599.2
(22) Anmeldetag: 23.12.2003
(51) Int. Cl.: B29B 15/12, F16L 55/165

(54) **Vorrichtung und Verfahren zur Herstellung eines aushärtbaren Schlauchs**
Apparatus and process for the manufacture of a crosslinkable hose
Dispositif et procédé pour la fabrication d'un tuyau réticulable

(43) Veröffentlichungstag der Anmeldung: 29.06.2005
(73) Patentinhaber: BKP Berolina Polyester GmbH & Co. KG, 13591 Berlin (DE)
(72) Erfinder: Odenwald, Ralf, 16727 Velten (DE); Persson, Jan Börje, 46111 Rocafort, Valencia (ES)
(74) Vertreter: Kohler Schmid Möbus

(56) Entgegenhaltungen:
- WO-A-01/54891
- DE-U- 20 208 963

## Beschreibung

Die vorliegende Erfindung betrifft ein Verfahren und eine Vorrichtung zum Imprägnieren eines axial geförderten mehrlagigen Schlauchs mit einer aushärtbaren Flüssigkeit, mit einer in Förderrichtung geneigten, insbesondere senkrechten, Imprägnierstrecke, auf der der Zwischenraum zwischen den in sich geschlossenen Innen- und Außenlagen des Schlauchs mit der aushärtbaren Flüssigkeit (vorzugsweise kontinuierlich) gefüllt wird, welche am unteren Ende der Imprägnierstrecke zurückgehalten ist.

Eine derartige Vorrichtung und ein derartiges Verfahren sind beispielsweise durch die DE 100 02 960 A1 bekannt geworden.

Bei der aus DE 100 02 960 A1 bekannten Vorrichtung ist der Zwischenraum des Schlauchs entlang der senkrechten Imprägnierstrecke mit der aushärtbaren Flüssigkeit unter Ausbildung eines Flüssigkeitssees gefüllt. Je länger die Imprägnierstrecke ist, desto höher ist die Flüssigkeitssäule im Zwischenraum, so dass die im Zwischenraum befindliche Zwischenlage des Schlauchs mit der aushärtbaren Flüssigkeit besser getränkt (imprägniert) wird. Allerdings steigt mit zunehmender Flüssigkeitssäule im Zwischenraum auch der darin herrschende Flüssigkeitsdruck, wodurch der Schlauch sich entlang der Imprägnierstrecke auf immer größere Durchmesser aufweitet. Diese Aufweitung des Schlauchs ist bei so genannten Relining-Schläuchen, die zur Sanierung von schadhaften Kanalrohren dienen, irreversibel und darf daher erst nach Einbringen des Relining-Schlauchs in das Kanalrohr mittels Druckluft erfolgen, um den Schlauch in Anlage an das Kanalrohr zu bringen.

Demgegenüber ist es die Aufgabe der vorliegenden Erfindung, ein Verfahren und eine Vorrichtung der eingangs genannten Art dahingehend weiterzubilden, dass der Schlauch entlang der Imprägnierstrecke durch die eingeleitete aushärtbare Flüssigkeit weniger aufgeweitet wird.

Diese Aufgabe wird erfindungsgemäß dadurch gelöst, dass der Schlauch entlang der Imprägnierstrecke in ein Tauchbad getaucht ist bzw. hindurch gefördert wird, dessen Flüssigkeitspegel sich oberhalb des unteren Endes der Imprägnierstrecke befindet.

Erfindungsgemäß wirkt der Flüssigkeitsdruck des Tauchbades dem im Zwischenraum des Schlauchs wirkenden Druck der aushärtbaren Flüssigkeit entgegen, wodurch der eingetauchte Schlauch weniger aufgeweitet wird, verglichen zu einer Imprägnierstrecke ohne Tauchbad. Der vom Tauchbad auf den Schlauch ausgeübte Druck ist abhängig von der Eintauchtiefe des Schlauchs, und der im Zwischenraum herrschende Druck der aushärtbaren Flüssigkeit ist abhängig von der Differenz der Flüssigkeitspegel im Tauchbad und im Zwischenraum. Der Flüssigkeitspegel des Tauchbades kann tiefer, gleich oder höher als der Pegel der aushärtbaren Flüssigkeit im Zwischenraum eingestellt werden, z.B. indem die Zufuhr der aushärtbaren Flüssigkeit in den Zwischenraum entsprechend eingestellt wird. Bevorzugt ist der Flüssigkeitspegel des Tauchbades höher als der Pegel der aushärtbaren Flüssigkeit im Zwischenraum, damit im Falle eines Lecks in der Außenlage des Schlauchs keine aushärtbare Flüssigkeit (z.B. Harz) aus dem Schlauch in die Flüssigkeit (z.B. Wasser) des Tauchbades austritt.

Da der vom Tauchbad auf den Schlauch wirkende Druck kontinuierlich zum unteren Ende der Imprägnierstrecke hin ansteigt, wirkt auf die im Zwischenraum des Schlauchs noch vorhandene Luft eine zusätzliche Auftriebskraft, welche die Luft aus dem Zwischenraum, insbesondere aus einer dort befindlichen Zwischenlage des Schlauchs, nach oben herausdrückt. Der so hergestellte Schlauch zeichnet sich dadurch aus, dass er gegenüber bekannten aushärtbaren Schläuchen weniger Lufteinschlüsse enthält.

Vorzugsweise ist die Temperatur des Tauchbades einstellbar, um so die Viskosität der aushärtbaren Flüssigkeit verändern zu können.

Ein besonders einfacher Weg, die aushärtbare Flüssigkeit am unteren Ende der Imprägnierstrecke zurückzuhalten, besteht darin, den Zwischenraum des Schlauchs am unteren Ende der Imprägnierstrecke abzuklemmen, zum Beispiel durch eine Engstelle (z.B. Walzenspalt) oder eine Umlenkung für den Schlauch.

Besonders bevorzugt weist der Schlauch eine Zwischenlage auf, die auf der Imprägnierstrecke mit der aushärtbaren Flüssigkeit imprägniert wird.

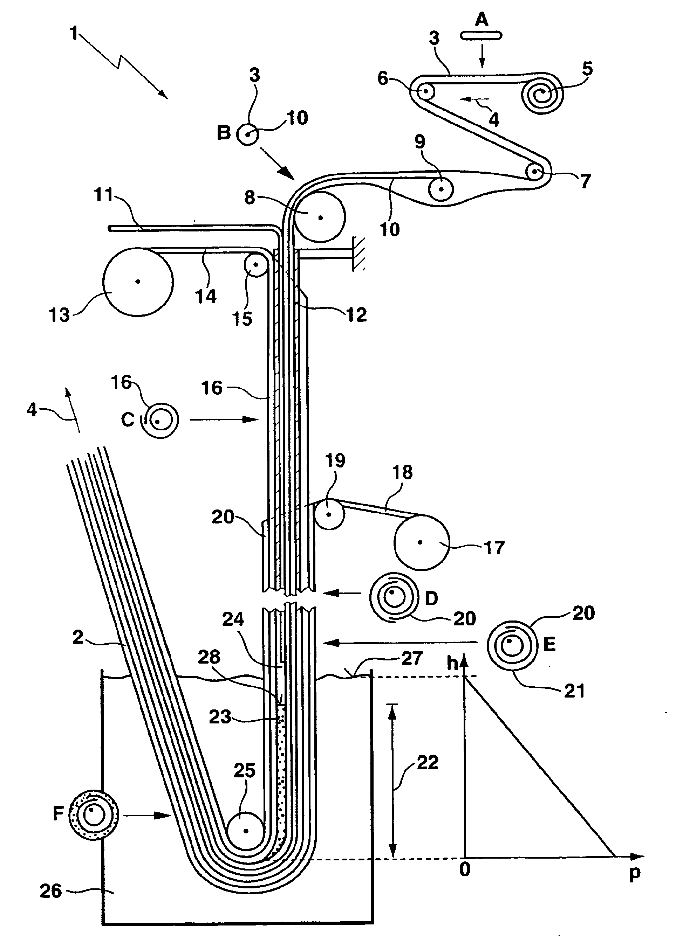

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die einzige Figur zeigt einen Längsschnitt durch eine Förderstrecke **1** zum Herstellen eines mehrlagigen aushärtbaren Schlauchs **2**, dessen jeweiliger Querschnitt entlang der Förderstrecke **1** ebenfalls dargestellt ist.

Den Anfang der Förderstrecke 1 bildet ein dünner Folienschlauch (Innenlage) **3** aus flüssigkeitsdichtem Kunststoff, der kontinuierlich in Förderrichtung **4** von einer Vorratsrolle **5** flach (Querschnitt **A**) abgezogen und dann über Umlenkungen 6, 7, 8 (schematisch als Umlenkrolle dargestellt) senkrecht nach unten umgelenkt wird. Beim anfänglichen Einfädeln des Folienschlauchs 3 in die Förderstrecke 1 wurde über das offene Schlauchende zwischen den Umlenkungen 7, 8 eine Vorratsrolle **9** lose eingelegt, von der sich ein darauf aufgewickeltes flexibles Längsmaterial **10** (z.B. eine Schnur oder ein Kabel) in den Folienschlauch 3 bei dessen Förderung abwickelt (Querschnitt **B**) und mit dem Folienschlauch 3 mitgefördert wird. Beim anfänglichen Einfädeln des Folienschlauchs 3 wird außerdem ein Luftvorrat in das Schlauchinnere hinzugegeben, damit nicht ein Unterdruck im Schlauchinneren dem Öffnen des Folienschlauchs 3 entgegenwirkt.

Nach der Umlenkung 8 wird der Folienschlauch 3 zusammen mit mindestens einer ortsfest gehaltenen Zuleitung **11** in ein ortsfest gehaltenes vertikales Formrohr **12** eingeführt. Von einer Vorratsrolle **13** wird eine Materialbahn **14** (z.B. eine Glasfaserbahn) abgezogen, über eine Umlenkrolle 15 umgelenkt und auf dem Formrohr 12 zu einer Zwischenlage 16 umgeschlagen, deren beide Stirnkanten einander überlappen (Querschnitt C). Dann wird von einer Vorratsrolle 17 eine flüssigkeitsdichte Materialbahn **18** (z.B. eine Folienbahn) abgezogen, über eine Umlenkrolle **19** umgelenkt und auf der Zwischenlage 16 zu einer Außenlage **20** umgeschlagen, deren beide Stirnkanten ebenfalls einander überlappen (Querschnitt **D**). Diese beiden Stirnkanten werden mittels einer nicht dargestellten Einrichtung durch eine Schweißnaht **21** miteinander flüssigkeitsdicht verschlossen (Querschnitt **E**). Vorzugsweise sind mehrere Vorratsrollen 13 vorgesehen, um mehrere Materialbahnen 14 jeweils zu einer überlappenden Zwischenlage 16 auf dem Formrohr 12 umzuschlagen.

Unten an das Formrohr 12 schließt sich eine senkrechte Imprägnierstrecke **22** an, auf der die Zwischenlage 16 mit einer aushärtbaren Flüssigkeit (z.B. Harz) **23** imprägniert wird. Dazu wird der zwischen Innenlage 3 und Außenlage 20 vorhandene Zwischenraum **24** über die mindestens eine Zuleitung 11 mit der aushärtbaren Flüssigkeit 23, vorzugsweise kontinuierlich, befüllt und so die Zwischenlage 16 mit der aushärtbaren Flüssigkeit 23 getränkt. Vorzugsweise sind mehrere Zuleitungen 11 vorgesehen, um die aushärtbare Flüssigkeit 23 zu beiden Seiten des flachen Folienschlauchs 3 in den Zwischenraum 24 einzuleiten. An einer Umlenkung **25** wird der Schlauch 2 nach oben umgelenkt, wodurch der Zwischenraum 24 abgeklemmt und überschüssige aushärtbare Flüssigkeit 23 in Förderrichtung 4 zurückgehalten wird.

Der Schlauch 2 wird entlang der Imprägnierstrecke 22 durch ein Tauchbad **26** gefördert, dessen Flüssigkeitspegel **27** sich oberhalb des unteren Endes der Imprägnierstrecke 22, d.h. oberhalb der Umlenkung 25, befindet. Der vom Tauchbad 26 auf den Schlauch 2 ausgeübte Druck **p** ist abhängig von der Eintauchtiefe h des Schlauchs 2, wie das neben dem Tauchbad 26 angeordnete Diagramm zeigt. Der im Zwischenraum 24 herrschende Druck der aushärtbaren Flüssigkeit 23 ist abhängig von der Differenz des Flüssigkeitspegels 27 im Tauchbad 26 und des Flüssigkeitspegels **28** im Zwischenraum 24. Über die Höhe des Flüssigkeitspegels 27 im Tauchbad 26 kann somit der Druck p eingestellt werden, welcher von außen dem im Zwischenraum 24 wirkenden Druck der aushärtbaren Flüssigkeit 23 entgegenwirkt. Im gezeigten Ausführungsbeispiel ist der Flüssigkeitspegel 27 des Tauchbades 26 höher als der Flüssigkeitspegel 28 der aushärtbaren Flüssigkeit 23 im Zwischenraum 24. Durch Ändern der Temperatur des Tauchbades 26 kann die Viskosität der aushärtbaren Flüssigkeit 23 beeinflusst werden. Der Querschnitt des Schlauchs 2 nach der Imprägnierstrecke 22 ist mit **F** bezeichnet.

Es ist noch klarzustellen, dass die Querschnitte B bis F des Schlauchs 2 nicht, wie in der Figur dargestellt, rund, sondern flach wie der Querschnitt A sind.

Da der vom Tauchbad 26 auf den Schlauch 2 wirkende Druck p kontinuierlich zum unteren Ende der Imprägnierstrecke 22 hin ansteigt, wirkt auf die in der Zwischenlage 16 des Schlauchs 2 noch eingeschlossenen Luftblasen jeweils eine zusätzliche Auftriebskraft, die am unteren Ende einer Luftblase größer als am oberen Ende ist. Dadurch werden noch vorhandene Luftblasen verstärkt aus der Zwischenlage16 nach oben herausdrückt.

Anders als in der Figur gezeigt, kann der Flüssigkeitspegel 27 des Tauchbades 26 auch gleich oder tiefer als der Pegel 28 der aushärtbaren Flüssigkeit im Zwischenraum 24 eingestellt werden.

## Patentansprüche

1. Verfahren zum Imprägnieren eines axial geförderten mehrlagigen Schlauchs (2) mit einer aushärtbaren Flüssigkeit (23), die auf einer in Förderrichtung (4) geneigten, insbesondere senkrechten, Imprägnierstrecke (22) in den Zwischenraum (24) zwischen den in sich geschlossenen Innen- und Außenlagen (3, 20) des Schlauchs (2) eingeleitet und am unteren Ende der Imprägnierstrecke (22) zurückgehalten wird,
**dadurch gekennzeichnet,**
**dass** der Schlauch (2) entlang der Imprägnierstrecke (22) in ein Tauchbad (26) getaucht wird, dessen Flüssigkeitspegel (27) sich oberhalb des unteren Endes der Imprägnierstrecke (22) befindet.

2. Verfahren nach Anspruch 1, **dadurch gekennzeichnet, dass** der Flüssigkeitspegel (27) des Tauchbades (26) gleich oder höher als der Pegel (28) der aushärtbaren Flüssigkeit (23) innerhalb des Zwischenraums (24) ist.

3. Verfahren nach Anspruch 1, **dadurch gekennzeichnet, dass** der Flüssigkeitspegel (27) des Tauchbades (26) tiefer als der Pegel (28) der aushärtbaren Flüssigkeit (23) innerhalb des Zwischenraums (24) ist.

4. Vorrichtung zum Imprägnieren eines axial geförderten mehrlagigen Schlauchs (2) mit einer aushärtbaren Flüssigkeit (23), insbesondere zum Durchführen des Verfahrens nach einem der vorhergehenden Ansprüche, mit einer in Förderrichtung (4) geneigten, insbesondere senkrechten, Imprägnierstrecke (22), auf der der Zwischenraum (24) zwischen den in sich geschlossenen Innen- und Außenlagen (3, 20) des Schlauchs (2) mit der aushärtbaren Flüssigkeit (23) gefüllt wird, welche am unteren Ende der Imprägnierstrecke (22) zurückgehalten ist,
**dadurch gekennzeichnet,**
**dass** die Vovrichtung entlang der Imprägnierstrecke (22) ein Tauchbad (26) umfasst, in das der Schlauch (2) getaucht ist, und dessen Flüssigkeitspegel (27) sich oberhalb des unteren Endes der Imprägnierstrecke (22) befindet.

5. Vorrichtung nach Anspruch 4, **dadurch gekennzeichnet, dass** der Flüssigkeitspegel (27) des Tauchbades (26) gleich oder höher als der Pegel (28) der aushärtbaren Flüssigkeit (23) innerhalb des Zwischenraums (24) ist.

6. Vorrichtung nach Anspruch 4, **dadurch gekennzeichnet, dass** der Flüssigkeitspegel (27) des Tauchbades (26) tiefer als der Pegel (28) der aushärtbaren Flüssigkeit (23) innerhalb des Zwischenraums (24) ist.

7. Vorrichtung nach einem der Ansprüche 4 bis 6, **dadurch gekennzeichnet, dass** die Temperatur des Tauchbades (26) einstellbar ist.

8. Vorrichtung nach einem der Ansprüche 4 bis 7, **dadurch gekennzeichnet, dass** der Zwischenraum (16) des Schlauchs (2) am unteren Ende der Imprägnierstrecke (22), insbesondere durch eine Engstelle oder eine Umlenkung (25), abgeklemmt ist.

9. Vorrichtung nach einem der Ansprüche 4 bis 8, **dadurch gekennzeichnet, dass** der Schlauch (2) mindestens eine Zwischenlage (24) aufweist, die auf der Imprägnierstrecke (22) mit der aushärtbaren Flüssigkeit (23) imprägniert wird.

## Claims

1. Process for impregnating an axially conveyed multilayer hose (2) with a curable liquid (23), which, in an impregnating section (22) which is inclined in the conveying direction (4), in particular vertical, is introduced into the interspace (24) between the intrinsically closed inner and outer layers (3, 20) of the hose (2) and is held back at the lower end of the impregnating section (22),
**characterized in that**
along the impregnating section (22), the hose (2) is immersed in a dip bath (26) whose liquid level (27) is above the lower end of the impregnating section (22).

2. Process according to Claim 1, **characterized in that** the liquid level (27) of the dip bath (26) is the same as or higher than the level (28) of the curable liquid (23) within the interspace (24).

3. Process according to Claim 1, **characterized in that** the liquid level (27) of the dip bath (26) is lower than the level (28) of the curable liquid (23) within the interspace (24).

4. Apparatus for impregnating an axially conveyed multilayer hose (2) with a curable liquid (23), in particular for carrying out the process according to one of the preceding claims, having an impregnating section (22) which is inclined in the conveying direction (4), in particular vertical, in which the interspace (24) between the intrinsically closed inner and outer layers (3, 20) of the hose (2) is filled with the curable liquid (23), which is held back at the lower end of the impregnating section (22),
**characterized in that**
along the impregnating section (22), the apparatus comprises a dip bath (26), in which the hose (2) is immersed and whose liquid level (27) is above the lower end of the impregnating section (22).

5. Apparatus according to Claim 4, **characterized in that** the liquid level (27) of the dip bath (26) is the same as or higher than the level (28) of the curable liquid (23) within the interspace (24).

6. Apparatus according to Claim 4, **characterized in that** the liquid level (27) of the dip bath (26) is lower than the level (28) of the curable liquid (23) within the interspace (24).

7. Apparatus according to one of Claims 4 to 6, **characterized in that** the temperature of the dip bath (26) is adjustable.

8. Apparatus according to one of Claims 4 to 7, **characterized in that** the interspace (16) of the hose (2) is clamped off at the lower end of the impregnating section (22), in particular by a constriction or a deflection (25).

9. Apparatus according to one of Claims 4 to 8, **characterized in that** the hose (2) has at least one intermediate layer (24) which is impregnated with the curable liquid (23) in the impregnating section (22).

## Revendications

1. Procédé d'imprégnation d'un tuyau souple (2) en plusieurs couches, convoyé axialement, à l'aide d'un fluide durcissable (23) qui est introduit, sur un trajet d'imprégnation (22) notamment vertical, incliné dans la direction de convoyage (4), dans l'espace interstitiel (24) situé entre les couches intérieure et extérieure (3, 20) dudit tuyau souple (2), par elles-mêmes fermées, puis est refoulé à l'extrémité inférieure dudit trajet d'imprégnation (22),
**caractérisé par le fait**
**que** le tuyau souple (2) est plongé, le long du trajet d'imprégnation (22), dans un bain d'immersion (26) dont le niveau de liquide (27) se trouve au-dessus de l'extrémité inférieure dudit trajet d'imprégnation (22).

2. Procédé selon la revendication 1, **caractérisé par le fait que** le niveau de liquide (27) du bain d'immersion (26) se trouve à la même hauteur ou plus haut que le niveau (28) du fluide durcissable (23) à l'intérieur de l'espace interstitiel (24).

3. Procédé selon la revendication 1, **caractérisé par le fait que** le niveau de liquide (27) du bain d'immersion (26) se trouve plus bas que le niveau (28) du fluide durcissable (23) à l'intérieur de l'espace interstitiel (24).

4. Dispositif d'imprégnation, à l'aide d'un fluide durcissable (23), d'un tuyau souple (2) en plusieurs couches convoyé axialement, notamment pour la mise en oeuvre du procédé selon l'une des revendications précédentes, comportant un trajet d'imprégnation (22) notamment vertical, incliné dans la direction de convoyage (4) et sur lequel l'espace interstitiel (24), entre les couches intérieure et extérieure (3, 20) dudit tuyau souple (2), par elles-mêmes fermées, est empli par le fluide durcissable (23) qui est refoulé à l'extrémité inférieure du trajet d'imprégnation (22),
**caractérisé par le fait**
**que** le dispositif comprend, le long du trajet d'imprégnation (22), un bain d'immersion (26) dans lequel le tuyau souple (2) est plongé, et dont le niveau de liquide (27) se trouve au-dessus de l'extrémité inférieure dudit trajet d'imprégnation (22).

5. Dispositif selon la revendication 4, **caractérisé par le fait que** le niveau de liquide (27) du bain d'immersion (26) se trouve à la même hauteur ou plus haut que le niveau (28) du fluide durcissable (23) à l'intérieur de l'espace interstitiel (24).

6. Dispositif selon la revendication 4, **caractérisé par le fait que** le niveau de liquide (27) du bain d'immersion (26) se trouve plus bas que le niveau (28) du fluide durcissable (23) à l'intérieur de l'espace interstitiel (24).

7. Dispositif selon l'une des revendications 4 à 6, **caractérisé par le fait que** la température du bain d'immersion (26) est réglable.

8. Dispositif selon l'une des revendications 4 à 7, **caractérisé par le fait que** l'espace interstitiel (24) du tuyau souple (2) est resserré à l'extrémité inférieure du trajet d'imprégnation (22), en particulier sous l'action d'un étranglement ou d'une pièce de renvoi (25).

9. Dispositif selon l'une des revendications 4 à 8, **caractérisé par le fait que** le tuyau souple (2) présente au moins une couche intercalaire (16) imprégnée, sur le trajet d'imprégnation (22), à l'aide du fluide durcissable (23).
